# EUROPEAN PATENT SPECIFICATION

(11) **EP 1 597 063 B1**
(45) Date of publication and mention of the grant of the patent: **31.03.2010**
(21) Application number: 03796606.6
(22) Date of filing: 03.12.2003
(51) Int. Cl.: E04C 2/04, B32B 13/02, B32B 13/08, B32B 13/14, B32B 29/02, E04F 13/14, E04F 13/16, B32B 17/02, B28B 19/00, B28B 23/00, D04H 3/04, D04H 3/12

(54) **TEXTILE REINFORCED WALLBOARD**
VERSTÄRKTE TEXTILE WANDPLATTE
PLAQUE DE PLATRE A RENFORT TEXTILE

(30) Priority: 30.01.2003 US 354612
(43) Date of publication of application: 23.11.2005
(73) Proprietor: Milliken & Company, Spartanburg, SC 29303 (US)
(72) Inventor: MCLARTY, George, C., III, Greenville, SC 29609 (US); CHILD, Andrew, D., Moore, SC 29369 (US); GERLICH, Johan, 6001 Wellington (NZ)
(74) Representative: HOFFMANN EITLE
(86) International application number: PCT/US2003/038432
(87) International publication number: WO 2004/069532

(56) References cited:
- WO-A-99/04112
- DE-A1- 2 005 219
- US-A- 2 681 863
- US-A- 3 944 698
- US-A- 3 944 698
- US-A- 4 378 405
- US-A- 5 552 207
- US-A1- 2002 151 240
- US-A1- 2004 025 465

## Description

### FIELD OF THE INVENTION

This invention relates to a gypsum wallboard, and more specifically to a novel gypsum wallboard having a textile reinforcing material embedded within a gypsum core together with randomly oriented chopped glass fibers. This invention further includes a novel method for producing wallboards.

### BACKGROUND OF THE INVENTION

Many past attempts have been made to strengthen gypsum wallboard by using different types of fibers in various configurations. Reinforcing fibers have been employed to strengthen the wallboard, usually by simply adding the reinforcing fibers to the core formulation. These chopped fibers tend to attach to the gypsum forming a random network within the core to prevent or reduce the amount of core fragments that might otherwise detach from the board or that may otherwise become loose. Additionally, the use of chopped glass fibers tends to increase fire resistance. Alternatively, continuous glass fiber strands have been utilized for reinforcement purposes, as well. Such continuous fiber strands may be bonded to the cover sheets, for instance in an undulating pattern in the plane of the board, or may be incorporated in the form of a fishnet or scrim arrangement.
Reference is made to US 3,944,698 A and US 2002/0151240 A1 as well as US 2004/0025465 A1. Further reference is made to DE 20 05 219 A1, WO 99/04112 A1, US 4,378,405 A, US 2,681,863 A and US 5,552,207 A.

Throughout the evolution of building products, the trend has been to make stronger, lighter wall assemblies that are cost efficient, fire resistant, and easy to assemble. Accordingly, it would be desirable to provide a stronger gypsum wallboard that may perform better than existing wallboards in standard hard body impact, standard soft body impact, and flexural strength tests, while maintaining an acceptable level of fire resistance. Further, it would be desirable to provide a method for manufacturing such a wallboard with efficient use of materials.

### SUMMARY OF THE INVENTION

Accordingly, it is an object of the present invention to provide a gypsum wallboard having superior strength and fire resistance characteristics to resist typical impacts and fires that may result in a building in which the panel is used.

The invention provides a reinforced wallboard having the features recited in claim 1 below, and a method for producing a reinforced wallboard having the features recited in claim 13 below. Advantageous further embodiments are recited in the dependent claims, respectively.

### BRIEF DESCRIPTION OF THE DRAWINGS

These and other features, aspects, and advantages of the present invention will become better understood with regard to the following description, appended claims, and accompanying drawings where:
Figure 1 illustrates an enlarged cross-sectional view of a gypsum wallboard constructed in accordance with this invention;
Figure 2 shows diagrammatically a production line for the continuous production of a reinforced gypsum wallboard;
Figure 3 shows a perspective view of a three-dimensional reinforcing fabric; and
Figure 4 shows a cross section of a gypsum wallboard incorporating the three-dimensional reinforcing fabric therein.

While the invention is illustrated and may be described in connection with a preferred embodiment, it will be understood that it is in no may intended to limit the invention to that embodiment. On the contrary, it is intended to cover all alternatives, modifications and equivalents as may be included within the scope of the invention as limited only by the appended claims.

### DETAILED DESCRIPTION

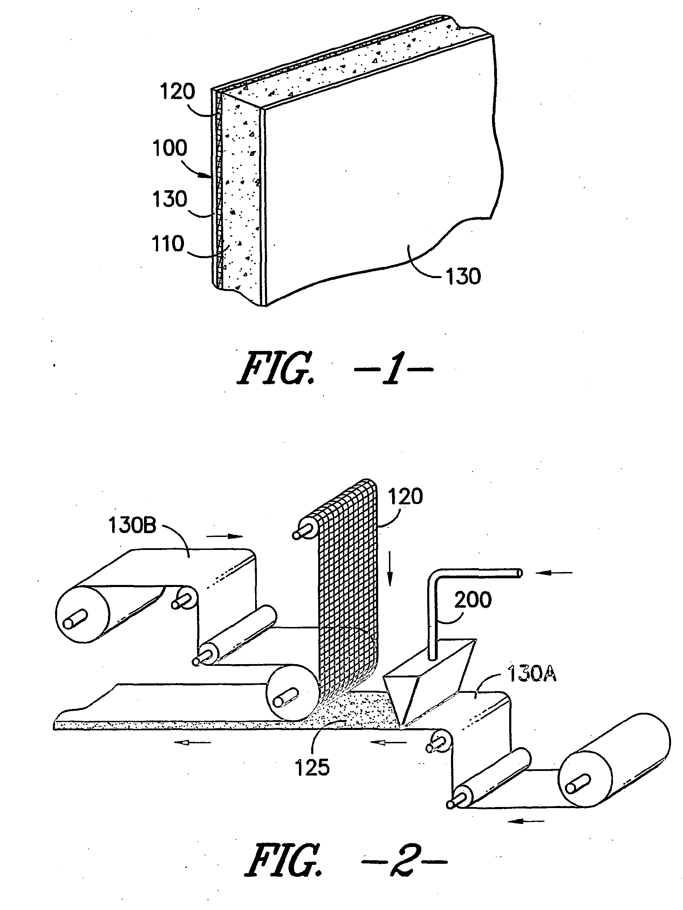

The new and improved textile reinforced gypsum wallboard 100 is shown in Figure 1.

### THE CORE

The core 110 comprises, in a preferred embodiment, gypsum, diethylene triamine tetra acetic acid, calcium naphthalene sulphonate, acid modified wheat starch, chopped fiberglass, foam, and raw vermiculite ore. The diethylene triamine tetra acetic acid serves as a stucco set-time retardant, while the calcium naphthalene sulphonate is a water reducing agent. The chopped fiberglass, which helps to reinforce the core and provide additional fire resistance properties, is preferably a 13 mm (½") M 19 product from Johns Manville, sold under the trade name CHOP-PAIL. The raw vermiculite ore is commonly used for fire rated (fire resistant) wallboards. It should be understood that while this core formulation is a particularly useful embodiment, many other core formulations would be suitable for use within the context of the wallboard disclosed herein. Optional components may also be used, when necessary, such as water repellent compounds, fire resistant compounds, set accelerators, retarders, foaming agents, dispersing agents, pulp fiber, and other suitable or desirable components. Alternatively, the core may comprise Portland cement, plaster, stucco and any combination thereof.

In commercial construction, a drywall system commonly requires a certain level of fire resistance. A typical example is a foot traffic corridor in a commercial building, which also serves as a means of egress in case of a fire. It is common practice to enhance the fire resistance of gypsum plasterboard by incorporating an even distribution of chopped fiber strands within the core gypsum matrix. During exposure to elevated temperatures gypsum plasterboard dehydrates and shrinks. Unreinforced plasterboard usually develops large isolated cracks after a relatively short period of fire exposure. An even distribution of glass fibers controls the pattern of shrinkage cracks and provides tensile strength when the face paper burns away, significantly enhancing the fire resistance. Fibers also result in better sheet integrity, which is especially important near the fasteners at the board edges to prevent premature fall of linings under exposure to fire.

Two boards were tested for fire resistance in accordance with Australian Standard AS 1530. The Standard Plasterboard contains no chopped glass fibers, but the Fire Resistant Plasterboard does. Results are as follows:
- 13 mm Standard Plasterboard achieves a fire resistance of 32 minutes on a metal stud frame.
- 13 mm Fire Resistant Plasterboard achieves a fire resistance of 63 minutes on a metal stud frame.

Although there are some other formulation differences such as plasterboard density and the addition of vermiculite that may contribute to the increased fire resistance rating, the main performance difference can be attributed to the addition of an even distribution of chopped glass fibre strands.

### THE TEXTILE REINFORCEMENT

The preferred textile reinforcement material 120 is a tri-directional fiberglass scrim material sold under the trade name STABILONO® from Milliken & Company, based in Spartanburg, SC, USA. The preferred scrim is a fiberglass material having a weight of 135 grams per square meter (gsm) and includes an acrylic coating. This material is identified as Milliken style number 930120. The warp is preferably 7.459 m/g (3,700 yard/lb.) fiberglass yarn with an approximate density often yarns per 2.54 cm (1 inch). The cross machine direction yarns are preferably 3.629 m/g (1,800 yard/lb.) fiberglass yarns. These yarns are inserted at a density of 2.7 yarns per 2.54 cm (1 inch) at both 45 degrees and 135 degrees. The total cross machine yarn density is approximately 5.4 yarns per 2.54 cm (1 inch). These yarns are commercially available from Advanced Glassfiber Yarns in Aiken, SC or PPG Industries in Pittsburgh, PA. Other suitable reinforcing textiles include a lighter bi-directional fiberglass scrim from Saint Gobain Technical Fabrics, which has a weight of 36 gsm. The Saint Gobain material is identified as Saint Gobain style number GDF4410/A. It is constructed of 15.119 m/g (7,500 yard/lb.) fiberglass yarns with a density of four yarns per 2.54 cm (1 inch). The cross machine direction yarns are 7.459 m/g (3,700 yard/lb.) fiberglass yarns inserted perpendicular to the machine direction yarns at a rate of four yarns per 2.54 cm (1 inch). The yarns are bonded with polyvinyl alcohol adhesive. Another alternative is a fiberglass scrim manufactured by Winstone Wallboards, Ltd. under the trade name DUROID, having a weight of 36 gsm, and is of a generally similar construction to the Saint Gobain material. Generally, the weight range of reinforcing textiles will fall between 0.5 oz/square yard (17 gsm) and 16 oz/square yard (543 gsm), and most preferably between 1.0 oz/square yard (34 gsm) and 6 oz/square yard (204 gsm). Other types of scrim materials including bi-directional (square or diamond) configurations may be used and the weight of such materials may be varied, depending on the amount of strength required for the particular wallboard application. Such scrim fabrics may, in alternative embodiments, be woven, knit, nonwoven, laid scrim, or may be extruded. Alternative reinforcing textiles may be made from base materials other than fiberglass, such as plastics, so long as they may be sufficiently adhered to the wallboard core, and so long as they provide sufficient tensile strength for reinforcement. Such alternative reinforcing materials include scrim or fabric made from carbon fibers, aramids (including meta-aramids such as Nomex® from DuPont and para-aramids such as KEVLAR®), and BASOFIL® manufactured by BASF Corporation. For fire resistant applications, scrims or fabrics made from fire resistant fibers having a high melting point may be used, including mineral fibers, rock wool, mineral wool, basalt and vermiculite.

Fiberglass is the preferred material used for the textile reinforcement because it is inexpensive to manufacture and process, it may be easily cut in line at the wallboard manufacturing plant, it survives the high temperatures in the manufacturing plant, it may be easily scored and snapped by workers on a construction site, and it is inherently fire resistant. Further, fiberglass has a Young's modulus rating similar to that of the wallboard core, which allows for the glass yarns to break under roughly the same stress as the breaking point of the wallboard core.

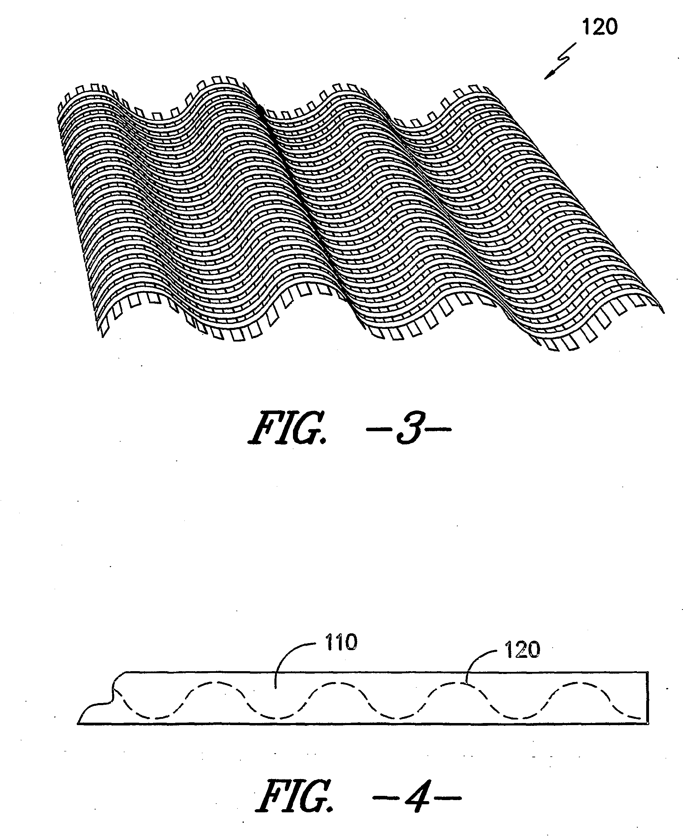

In an alternate embodiment, the reinforcing scrim 120 may be formed into a three-dimensional wave structure, one example of which is shown in Figure 3. Figure 4 shows the three-dimensional structure of Figure 3 as it is incorporated into a wallboard. Such a structure provides dimensional stability in three dimensions, rather than two dimensions. In one preferred embodiment, the reinforcing scrim is formed in a three-dimensional configuration so that the peaks and valleys of the structure run in a longitudinal direction of the wallboard. Other potentially preferred embodiments include wallboards where the reinforcing scrim is formed into a three-dimensional structure so that each peak and valley of the structure runs in a transverse direction, or alternatively in a bias direction, with respect to the wallboard. The fabric may be formed into a three dimensional shape during the board formation process, where a flat reinforcing fabric is shaped into the three-dimensional structure as it is fed into the slurry. One method of forming the reinforcing scrim or fabric into a three-dimensional shape is to run the fabric over a mold having the desired three-dimensional shape, and to simultaneously apply a resin to the fabric in order to hold the desired shape. Although the three-dimensional fabric is shown herein as being in a repeating U or sine wave shape, it is contemplated that any desired or suitable three-dimensional shape may be used, such as a repeating V shape or a square wave shape.

Alternatively, other reinforcing structures may be used, including Tensar®, which is a plastic mesh web manufactured by Netlon Limited Company of the United Kingdom, thermoplastic nonwovens such as a polyester needlepunched mat, or Colbond products such as the ARMATER® honeycomb-type geocomposite, ENKAGRID® geogrid, or the ENKAMAT® three-dimensional polymer matting. Suitable reinforcing structures will be characterized by sufficient porosity to allow moisture to escape, relatively high adhesive strength to gypsum, sufficient tensile strength to improve flexural strength and/or impact resistance, and will be lightweight.

### THE PAPER

In a preferred embodiment, the paper 130 used on the face of the wallboard is Ivory Face Paper having a weight of 190 gsm, while the preferred paper for the back of the wallboard is Brown Back Paper, having a weight of 190 gsm. Preferably, the paper should have a weight range between 150 gsm and 450 gsm, and more preferably between 170 gsm and 300 gsm. These face and back papers are commercially available from VISY PAPER Pty. Ltd. of Australia.

### THE ADHESIVE

It has been found that the use of non-water-soluble adhesives, and more specifically acrylic adhesives, when used to bind the reinforcing textile together and to bind the reinforcing textile to the wallboard core, have shown surprising results in bending strength testing, as shown in the examples and tables below. The preferred acrylic adhesive is Noveon's MW 3145. This is a cross-linking acrylic co-polymer suitable for bonding textile yarns in a laid scrim operation. This chemical is available through Noveon of Gastonia, NC.

### EXAMPLE 1

Below is one example of a wallboard formed in accordance with one aspect of the present invention.

| | | | | | | | |
|---|---|---|---|---|---|---|---|
| BOARD WIDTH | 1.2 | M | | | | | |
| BOARD THICKNESS | 13 | Mm | | | | | |
| IVORY FACE PAPER KG/M2 | 0.1979 | Width | 1250 | mm | Weight | 190 | gsm |
| BROWN BACK PAPER KG/M2 | 0.1876 | Width | 1185 | mm | Weight | 190 | gsm |
| Total Paper KG/M2 | 0.3855 | | | | | | |
| TOTAL PAPER THICKNESS mm | 0.6000 | | | | | | |
| GYPSUM KG/M2 | 10.2109 | | | | | | |
| FIBERGLASS SCRIMKG/M2 | 0.0360 | Saint Gobain GDF 4410/A -35.7gsm,PVOH coating | | | | | |
| DPTA (TRILON C) KG/M2 | 0.0030 | Diethylene Triamine Tetra Acetic Acid - Plaster retarder | | | | | |
| DURASAR KG/M2 | 0.0126 | Ca Naphthalene Sulphonate -Water reducing agent | | | | | |
| STARCH KG/M2 | 0.0500 | Acid modified wheat starch | | | | | |
| CHOPPED FIBERGLASS KG/M2 | 0.0300 | 1/2" M 190 Johns Manville CHOP-PAK | | | | | |
| FOAM KG/M2 | 0.0020 | | | | | | |
| VERMICULITE KG/M2 | 0.4600 | | | | | | |
| Total minor Ingredients | 0.5936 | | | | | | |
| BOARD WEIGHT KG/M2 | 11.1900 | | | | | | |
| WATER/STUCCO RATIO | 0.82 | | | | | | |

### MANUFACTURING METHOD

Gypsum plasterboard (wallboard) is conventionally manufactured by enclosing a core containing an aqueous slurry of calcined gypsum (stucco or calcium sulphate hemihydrate) between two sheets of paper. The slurry may contain other additives, such as chopped glass fibers, vermiculite, and other suitable or desirable additives, as discussed previously. Stucco is typically manufactured by drying, grinding and calcining gypsum rock to produce the stucco (calcined gypsum). The calcination reaction is described by the following equation:

CaSO₄.2H₂O + heat → CaSO₄.1/2H₂O + 1 ½ H₂O

The 'setting' reaction is the reverse of the above calcination reaction and involves a reaction of the stucco when mixed with water. The theoretical water content of the stucco slurry required for full reaction of high purity stucco is approximately 19%. The slurry then relatively quickly sets or hardens into a gypsum mass.

Commercial manufacturing of gypsum wallboard typically occurs under continuous high-speed conditions wherein the stucco and other ingredients are continuously mixed with warm water, and the resulting slurry 125 is continuously deposited onto a first continuously fed sheet of paper 130A using slurry depositing mechanism 200, as shown in Figure 2. The temperature of the stucco slurry is preferably controlled at between 35°C and 40°C to improve core strength and accelerate the stucco hydration process. More preferably the slurry temperature is between 37°C and 39°C. Excess water is incorporated into the slurry to improve fluidity and allow the slurry to flow across nearly the full width of the first sheet of paper. Typically the water-to-stucco mixing ratio is about 60 to about 75-weight parts water per 100-weight parts stucco.

In one potentially preferred embodiment, a coated fiberglass reinforcing scrim 120 is continuously fed so that the scrim is placed and set on top of the slurry 125. It has been found that a high water resistant coating applied to fiberglass reinforcing scrim results in enhanced soft and hard body impact performance. High water resistant coating binders may include but are not limited to polyvinyl acetate, polyvinyl acetate and acrylic copolymers, styrene acrylic, styrene butadiene and acrylic. Conversely, a low water resistant coating applied to an identical fiberglass reinforcing scrim has significantly lower soft and hard body impact resistant performance. Low water resistant coating binders may include but are not limited to polyvinyl alcohol or starch. When samples of a polyvinyl acetate and acrylic co-polymer coated scrim were immersed in water maintained at a temperature of 45°C for 13.5 minutes, the water absorbed as measured by weight gained was about 13%. When the same scrim was immersed in water maintained at 45°C for 20 minutes the water absorbed was about 15%. The scrim retained its weave and shape through both of these tests. However, when a scrim of identical makeup, but coated with a polyvinyl alcohol, was tested in an identical manner, the binder dissolved within about one minute and the bundles of reinforcing fibers in the scrim separated without agitation. Thus, it was not possible to assess the moisture uptake of the binder because it rapidly dissolved in warm water.

In one potentially preferred embodiment, a second continuously fed sheet of paper 130B is applied onto the top of the stucco slurry 125 and the reinforcing scrim 120, resulting in a full encasement of the reinforcement and wallboard core. However, it is contemplated herein that the reinforcing scrim could be used without the second continuously fed sheet of paper.

This composite is supported on a continuous smooth rubber type belt (not shown) while the stucco sets through the hydration process. The setting reaction produces gypsum crystals, which form and grow into the internal or bonding ply of the paper lining, resulting in a strong bond between the gypsum wallboard core and the paper lining. The continuously formed composite mass moves along the forming belt and over the supporting rollers in a controlled manner to allow for a time period sufficient for the gypsum wallboard core to set hard enough to be cleanly cut into sheets of predetermined length. Typically this period is about 3 minutes to about 15 minutes depending on core ingredients, formulation, wallboard weight and wallboard thickness. Generally, a high-density 13mm gypsum wallboard requires about 13 minutes setting time prior to cutting. Typically wallboard manufacturers use knives with four or five teeth per inch to cut gypsum wallboard. However, it has been found that the use of knives with nine or ten teeth per inch results in a cleaner cutting or severing of the reinforcing scrim and the wallboard. The cut sheets of wallboard are fed into a dryer to remove any remaining surplus moisture.

### FLEXURAL TEST

Table 1, titled "Flexural Testing" is a detailed explanation of the gypsum panels produced and the corresponding flexural test results. The first three columns of the table contain the description of the reinforcement and the last three columns of the table are a summary of the test results. Sample 1 is a control without fabric reinforcement. Samples 2, 3, and 4 are boards identical to the control sample with different reinforcing fabrics added to the core. Sample 2 is a bi-directional laid scrim with a weight of 36 gsm. The bonding adhesive of this sample is polyvinyl alcohol. Samples 3 and 4 are 135 gsm Stabilon® tri-directional fiberglass fabrics from Milliken & Company. Sample 3 has traditional polyvinyl alcohol and Sample 4 has the cross-linked acrylic co-polymer adhesive MW-3145.

**TABLE 1**

| **FLEXURAL TESTING** | | | | | |
|---|---|---|---|---|---|
| Sample Identification and Description | Scrim Weight (gsm) | Adhesive | Test Direction | MOR (MPa) | Improvement over control (%) |
| 1. Control (no scrim) | - | - | para | 7.06 | Control |
| | | | perp | 3.44 | Control |
| 2. Saint Gobain Technical Fabrics bi-directional | 36 | Polyvinyl alcohol | Para | 8.33 | 18 |
| | | | Perp | 5.30 | 54 |
| 3. Milliken tri-directional fiberglass scrim | 135 | Polyvinyl alcohol | Para | 12.60 | 78 |
| | | | perp | 5.71 | 66 |
| 4. Milliken tri-directional fiberglass scrim | 135 | Cross-linked acrylic co-polymer | para | 14.12 | 100 |
| | | | perp | 11.27 | 227 |

All of the samples were tested for flexural strength according to AS/NZS 2588:1988 on 100 mm wide samples with approximate beam length of 356 mm. The rate of loading was 25 mm/minute. The results are reported for the "face-up" specimens representing the effect of the different reinforcing materials in column 5 of Table 1. Samples 1 through 4 were tested in both the parallel and perpendicular machine directions. The results show fiberglass reinforced cores combined with fabrics are greatly more effective-than the control groups. Comparing Sample 3 to Sample 2 shows the improved efficiency of fabric weight. Samples 3 and 4 can be compared to see the effect the fabric coating has on the wallboard. The results show a clear improvement in the peak load required to break the panel with the substitution of the polyvinyl alcohol with a cross-linked acrylic co-polymer adhesive.

### HARD BODY IMPACT TESTS

Hard body impact tests were performed on several different wallboards in accordance with a draft ASTM Standard entitled "Standard Specification for Abuse Resistance Interior Panels" dated September 11, 2002. Generic descriptions of the boards tested are given in Table 2. Average measured board densities and thicknesses are given in Table 3.

**TABLE 2**

| **GENERIC DESCRIPTION OF BOARDS TESTED** | |
|---|---|
| **Board Label** | **Scrim incorporated near back face of GIB Toughline^{®} board** |
| **Duroid** | Duroid scrim |
| **Saint Gobain** | Saint Gobain scrim |
| **Miliken PVOH** | Miliken fabric 135gsm # 930120 451 - PVOH coating scrim |
| **Miliken Acrylic** | Milliken fabric 135gsm # 930120 450 - Acrylic coating scrim |
| **Unreinforced** | Non fabric reinforced wallboard core |

### OBSERVATION AND RESULTS

A summary of the maximum drop height resisted before the board was decreed to have failed is given in Table 3. What constitutes failure has been taken to be a complete penetration of the hammer through the sheets.

Specimen 1 of Saint Gobain and Duroid and Specimen 1 and 2 of the Milliken PVOH were subjected to multi-impacts at the same location. This was to develop the impact levels for subsequent tests. Failure for both Saint Gobain and Duroid resulted from an impact with a 350 mm C.O.M drop at the same location as a 300 mm C.O.M. drop impact had already occurred. (C.O.M. means center of mass).

**TABLE 3**

| **SUMMARY OF MAXIMUM DROP HEIGHT RESISTED WITHOUT "FAILURE" (FAILURE IS DEFINED TO BE A COMPLETE PENETRATION OF THE IMPACT HAMMER HEAD)** | | | |
|---|---|---|---|
| **Board Label** | **Thickness (mm)** | **Density kg/m³** | **Maximum C.O.M. Drop Height (mm)** |
| Unreinforced | 13.04 | 869 | 150 |
| Saint Gobain | 12.72 | 886 | 300 |
| Duroid | 12.87 | 851 | 300 |
| Miliken PVOH | 13.01 | 834 | 350 |
| Milken Acrylic | 12.84 | 858 | 450 |

Thus, it can be seen that the combination between chopped glass fibers incorporated into a gypsum wallboard core and a reinforcing scrim embedded therein has resulted in a novel wallboard structure having superior strength characteristics without sacrificing fire resistance.

Although the present invention has been described in considerable detail with reference to certain preferred versions thereof, other versions are possible. Therefore, the scope of the appended claims should not be limited to the description of the preferred versions contained herein.

## Claims

1. A reinforced wallboard (100) comprising:
a core material (110) selected from the group consisting of gypsum, Portland cement, plaster, stucco and any combination thereof, and including chopped glass fibers; at least one layer of a textile reinforcement (120) wherein said textile reinforcement (120) is a scrim material that is adhered together by means of a non-water soluble adhesive;
**characterized in that**
the textile reinforcement (120) is formed into a three-dimensional wave shape and embedded within said core;
at least one first layer of paper (130) is disposed on a first side of said wallboard; and
a second layer of paper (130) is disposed on an opposed side from said first layer of paper.

2. The reinforced wallboard set forth in claim 1, wherein said textile reinforcement is selected from the group consisting of tri-directional fiberglass laid scrim material or bi-directional fiberglass laid scrim material.

3. The reinforced wallboard set forth in claim 1 or 2, wherein said textile reinforcement material is disposed adjacent said first layer of paper.

4. The reinforced wallboard set forth in any of the preceding claims, wherein said scrim material (120) has a weight in the range of between 17 gsm and 543 gsm.

5. The reinforced wallboard set forth in any of the preceding claims, wherein said adhesive is an acrylic adhesive.

6. The reinforced wallboard set forth in any of the preceding claims, wherein said wallboard (100) has a weight in the range between 4.8 and 24.4 kg/m² (1000 and 5000 pounds/1000 sq. feet).

7. The reinforced wallboard set forth in any of the preceding claims, wherein said wallboard (100) has a density in the range between 400 and 1,600 kg/m³ (25 and 100 pounds per cubic foot).

8. The reinforced wallboard set forth in any of the preceding claims, wherein said textile reinforcement (120) is made from continuous fiberglass strands.

9. The reinforced wallboard set forth in claim 8, further including a second textile reinforcement adjacent an opposed side of said wallboard (100).

10. The reinforced wallboard set forth in any of the preceding claims, wherein said textile reinforcement (120) is disposed adjacent a face or back of said wallboard.

11. The reinforced wallboard set forth in any of the preceding claims, wherein said three-dimensional wave shaped textile reinforcement is oriented within said wallboard so that each peak and valley of said wave shaped textile reinforcement runs in either a longitudinal direction, or in a transverse direction, or in a bias direction with respect to said wallboard.

12. The reinforced wallboard set forth in any of the preceding claims, wherein said core material is gypsum.

13. A method for producing a reinforced wallboard, said method comprising the steps of:
providing a continuous feed of a first layer of paper; providing a continuous feed of a core slurry to spread over said first layer of paper, wherein said core slurry includes chopped glass fibers;
providing a continuous feed of a textile reinforcement material and forming said textile reinforcement material into a three-dimensional wave shape;
applying a non-water soluble adhesive to said textile reinforcement;
providing a continuous feed of a second layer of paper; bringing said layers of paper, said core slurry and said textile reinforcement together; and
allowing said core slurry to set between said layers of paper with said textile reinforcement being disposed adjacent said second layer of paper.

14. The method set forth in claim 13, further including the step of turning up the sides of said first layer of paper so as to form a trough in which the core slurry can be accommodated.

15. The method set forth in any of claims 13 and 14, further including the step of heating the wallboard to facilitate the setting of the core material.

16. The method set forth in any of claims 13 to 15, wherein said non-water soluble adhesive is an acrylic adhesive.

17. The method set forth in any of claims 13 to 16, wherein said textile reinforcing material is a fiberglass laid scrim, preferably a tri-directional scrim.

## Patentansprüche

1. Verstärkte Wandbauplatte, umfassend:
ein Kernmaterial (110), das aus der Gruppe, umfassend Gips, Portlandzement, Putz, Mörtel, Stuck und einer Kombination davon ausgewählt wird, und zerhackte Glasfasern aufweist,
zumindest eine Schicht eines Textilgewebes (120),
wobei das Textilgewebe (120) ein Gitterstoffmaterial ist, das aneinander mittels eines nicht-wasserlöslichen Haftmittels haftet,
**dadurch gekennzeichnet, dass**
das Textilgewebe (120) in eine dreidimensionale Wellenform geformt ist und in den Kern eingebettet ist,
zumindest eine erste Schicht Papier (130) auf einer ersten Seite der Wandbauplatte angeordnet ist, und
eine zweite Schicht Papier (130) auf einer gegenüberliegenden Seite zu der ersten Seite Papier angeordnet ist.

2. Verstärkte Wandbauplatte nach Anspruch 1, bei der das Textilgewebe aus der Gruppe bestehend aus tridirektionalem gelegtem Fiberglasgitterstoffmaterial oder aus bidirektional gelegtem Fiberglasgitterstoffmaterial besteht.

3. Verstärkte Wandbauplatte nach Anspruch 1 oder 2, bei der das Textilgewebe neben der ersten Schicht Papier angeordnet ist.

4. Verstärkte Wandbauplatte nach einem der vorhergehenden Ansprüche, bei der das Gittermaterial (120) ein Gewicht im Bereich zwischen 17 g/m² und 543 g/m² aufweist.

5. Verstärkte Wandbauplatte nach einem der vorhergehenden Ansprüche, bei der das Haftmittel ein Acrylhaftmittel ist.

6. Verstärkte Wandbauplatte nach einem der vorhergehenden Ansprüche, bei der die Wandbauplatte (100) ein Gewicht im Bereich zwischen 4,8 und 24,4 kg/m² (1.000 bis 5.000 Pf / 1000 ft²) aufweist.

7. Verstärkte Wandbauplatte nach einem der vorhergehenden Ansprüche, bei der die Wandbauplatte (100) eine Dichte in dem Bereich zwischen 400 und 1.600 kg/m³ (25 bis 100 Pf/ft³) aufweist.

8. Verstärkte Wandbauplatte nach einem der vorhergehenden Ansprüche, bei der das Textilgewebe (120) aus durchgehenden Fiberglasfasern hergestellt ist.

9. Verstärkte Wandbauplatte nach Anspruch 8, ferner umfassend ein zweites Textilgewebe neben einer gegenüberliegenden Seite der Wandbauplatte (100).

10. Verstärkte Wandbauplatte nach einem der vorhergehenden Ansprüche, bei der das Textilgewebe (120) angrenzend an eine Seite oder hinter der Wandbauplatte angeordnet ist.

11. Verstärkte Wandbauplatte nach einem der vorhergehenden Ansprüche, bei der das dreidimensionale, wellenförmige Textilgewebe so in der Wandbauplatte orientiert ist, dass jede Spitze und jedes Tal des wellenförmigen Textilgewebes entweder in einer Längsrichtung oder in einer Querrichtung oder in einer Vorspannrichtung in Bezug auf die Wandbauplatte verläuft.

12. Verstärkte Wandbauplatte nach einem der vorhergehenden Ansprüche, bei der das Kernmaterial Gips ist.

13. Verfahren zum Herstellen einer verstärkten Wandbauplatte, wobei das Verfahren die Schritte umfasst:
Vorsehen einer kontinuierlichen Zuführung einer ersten Schicht Papier,
Vorsehen einer kontinuierlichen Zuführung eines Kernschlamms, um diesen über der ersten Schicht Papier zu verteilen, wobei der Kernschlamm zerstückelte Glasfasern umfasst,
Vorsehen einer kontinuierlichen Zuführung eines Textilgewebematerials und Formen des Textilgewebematerials in eine dreidimensionale Wellenform,
Anwenden eines nicht wasserlöslichen Haftmittels auf das Textilgewebe,
Vorsehen einer kontinuierlichen Zuführung einer zweiten Schicht Papier,
Zusammenführen der Papierschichten, des Kernschlamms und des Textilgewebes, und
Zulassen, dass der Kernschlamm zwischen den Papierschichten erstarrt, wobei das Textilgewebe neben der zweiten Schicht Papier angeordnet ist.

14. Verfahren nach Anspruch 13, ferner umfassend den Schritt des Aufrichtens der Seiten der ersten Schicht Papier, um eine Mulde auszubilden, in der der Kernschlamm aufgenommen werden kann.

15. Verfahren nach Anspruch 13 oder 14, ferner umfassend den Schritt des Erhitzens der Wandbauplatte, um das Erstarren des Kernmaterials zu erleichtern.

16. Verfahren nach einem der Ansprüche 13 bis 15, bei dem das nicht wasserlösliche Haftmittel ein Acrylhaftmittel ist.

17. Verfahren nach einem der Ansprüche 13 bis 16, bei dem das Textilgewebematerial ein gelegter Fiberglasgitterstoff, bevorzugt ein tridirektionaler Gitterstoff ist.

## Revendications

1. Plaque de plâtre renforcée (100) comprenant :
un matériau de noyau (110) choisi dans le groupe comprenant le gypse, le ciment Portland, le plâtre, le stuc et l'une quelconque de leur combinaison, et des fibres de verre coupées ;
au moins une couche d'un renforcement textile (120) dans laquelle ledit renforcement textile (120) est un canevas léger qui est fixé au moyen d'une colle non soluble dans l'eau ;
**caractérisée en ce que** :
le renforcement textile (120) est formé selon une forme d'onde tridimensionnelle et noyé à l'intérieur dudit noyau ;
au moins une première couche de papier (130) est disposée sur un premier côté de ladite plaque de plâtre ; et
une seconde couche de papier (130) est disposée sur un côté opposé de ladite première couche de papier.

2. Plaque de plâtre renforcée selon la revendication 1, dans laquelle ledit renforcement textile est choisi dans le groupe comprenant un canevas léger tramé en fibres de verre tridirectionnelles ou un canevas léger tramé en fibres de verre bidirectionnelles.

3. Plaque de plâtre renforcée selon la revendication 1 ou 2, dans laquelle ledit matériau de renforcement textile est disposé de manière adjacente à ladite première couche de papier.

4. Plaque de plâtre renforcée selon l'une quelconque des revendications précédentes, dans laquelle ledit canevas léger (120) a un poids compris entre 17 gsm et 543 gsm.

5. Plaque de plâtre renforcée selon l'une quelconque des revendications précédentes, dans laquelle ladite colle est une colle acrylique.

6. Plaque de plâtre renforcée selon l'une quelconque des revendications précédentes, dans laquelle ladite plaque de plâtre (100) a un poids compris entre 4,8 et 24,4 kg/m² (1000 et 5 000 livres/1000 pieds carré).

7. Plaque de plâtre renforcée selon l'une quelconque des revendications précédentes, dans laquelle ladite plaque de plâtre (100) a une densité comprise entre 400 et 1 600 kg/m³ (25 et 100 livres par pied cubique).

8. Plaque de plâtre renforcée selon l'une quelconque des revendications précédentes, dans laquelle ledit renforcement textile (120) est réalisé à partir de brins de fibre de verre continus.

9. Plaque de plâtre renforcée selon la revendication 8, comprenant en outre un second renforcement textile adjacent à un côté opposé de ladite plaque de plâtre (100).

10. Plaque de plâtre renforcée selon l'une quelconque des revendications précédentes, dans lequel ledit renforcement textile (120) est disposé de manière adjacente à une face ou le dos de ladite plaque de plâtre.

11. Plaque de plâtre renforcée selon l'une quelconque des revendications précédentes, dans laquelle ledit renforcement textile en forme d'onde tridimensionnelle est orienté dans ladite plaque de plâtre de sorte que chaque sommet et creux dudit renforcement textile en forme d'onde s'étend dans une direction longitudinale ou dans une direction transversale, ou bien dans une direction oblique par rapport à ladite plaque de plâtre.

12. Plaque de plâtre renforcée selon l'une quelconque des revendications précédentes, dans laquelle ledit matériau de noyau est du gypse.

13. Procédé pour produire une plaque de plâtre renforcée, ledit procédé comprenant les étapes consistant à :
prévoir une alimentation continue d'une première couche de papier ;
prévoir une alimentation continue d'une pâte de noyau destinée à être étalée sur ladite première couche de papier, dans lequel ladite pâte de noyau comprend des fibres de verre coupées ;
prévoir une alimentation continue d'un matériau de renforcement textile et former ledit matériau de renforcement textile selon une forme d'onde tridimensionnelle ;
appliquer une colle non soluble dans l'eau sur ledit renforcement textile ;
prévoir une alimentation continue d'une seconde couche de papier ;
rassembler lesdites couches de papier, ladite pâte de noyau et ledit renforcement textile ; et
permettre à ladite pâte de noyau de durcir entre lesdites couches de papier avec ledit renforcement textile qui est disposé de manière adjacente à ladite seconde couche de papier.

14. Procédé selon la revendication 13, comprenant en outre l'étape consistant à retourner les côtés de ladite première couche de papier afin de former une goulotte dans laquelle la pâte de noyau peut être logée.

15. Procédé selon l'une quelconque des revendications 13 et 14 comprenant en outre l'étape consistant à faire chauffer la plaque de plâtre pour faciliter le durcissement du matériau de noyau.

16. Procédé selon l'une quelconques des revendications 13 à 15, dans lequel ladite colle non soluble dans l'eau est une colle acrylique.

17. Procédé selon l'une quelconque des revendications 13 à 16, dans lequel ledit matériau de renforcement textile est un canevas léger tramé en fibres de verre, de préférence un canevas tridirectionnel.
